# FASCICULE DE BREVET EUROPEEN

(11) **EP 1 207 535 B1**
(45) Date de publication et mention de la délivrance du brevet: **18.01.2006**
(21) Numéro de dépôt: 01402841.9
(22) Date de dépôt: 05.11.2001
(51) Int. Cl.: H01B 1/24, H01M 8/02, H01M 4/96, C25B 9/04

(54) **Poudre micorcomposite à base d'un électroconducteur et d'un fluoropolymère et objets fabriqués avec cette poudre**
Leitfähiges Fluoropolymer-mikropulver und daraus hergestellte Gegenstände
Conductive microcomposite fluoropolymer powder and artifacts made thereof

(30) Priorité: 20.11.2000 FR 0014934; 25.06.2001 FR 0108333
(43) Date de publication de la demande: 22.05.2002
(73) Titulaire: Arkema, 92800 Puteaux (FR)
(72) Inventeur: Bonnet, Anthony, 27470 Serquigny (FR); Triballier, Karine, 27800 Saint-Eloi-de-Fourques (FR); Bussi, Philippe, 27300 Bernay (FR); Burchill, Michael, Langhorne, PA 19047 (US); Foure, Michael, Atofina Chemicals - Technological, King of Prussia, PA 19406-0936 (US)
(74) Mandataire: Neel, Henry

(56) Documents cités:
- EP-A- 0 580 278
- GB-A- 2 220 666
- US-A- 4 214 969
- US-A- 5 441 823

## Description

### [Domaine de l'invention]

La présente invention concerne une poudre microcomposite à base d'un électroconducteur (par exemple le carbone) et d'un PVDF homo- ou copolymère ainsi que les objets fabriqués avec cette poudre. Plus précisément la poudre microcomposite est constituée de particules de taille de l'ordre de 0,1 µm à 0,5 µm en PVDF, fixées sur un élément électroconducteur de taille de l'ordre de 1 à 300 µm qui est avantageusement du graphite, un agrégat de noir de carbone, une fibre de carbone, un charbon actif, des nanotubes de carbone. Cette poudre peut être obtenue par coatomisation.

Elle est particulièrement utile pour la réalisation de plaques bipolaires utilisées dans les piles à combustible. Les piles à combustible (fuel cells) qui sont constituées de ces plaques bipolaires subissent des conditions sévères d'utilisation en terme de pression, de température et d'agression chimique et électrochimique. Ces plaques bipolaires doivent donc pouvoir résister à ces différentes conditions ainsi que pouvoir être manipulées facilement lors du montage de la pile à combustible. Il existe plusieurs types de fonctionnement de piles à combustibles qui génèrent des cahiers des charges différents en ce qui concerne les caractéristiques que doivent présenter les plaques bipolaires en terme de conductivité, de résistance mécanique et de perméabilité.

### [l'art antérieur et le problème technique]

Le brevet DE 3538732 décrit une électrode faite d'une pâte pouvant être étendue et constituée de 70 à 80 % en masse de poudre de carbone de taille de granulés 30 à 300 µm et de 10 à 20 % en masse d'une solution de PVDF à 4 à 8% de PVDF dans le DMF (diméthylformamide) et d'au moins 5 % en masse de poudre de PTFE de taille de granulés de 10 à 100 µm. La pâte est étendue sur un substrat en aluminium puis séchée par une lampe infra rouge pendant ½ h à 4 h. Cette électrode à base de PVDF et de carbone est perméable aux gaz et aux liquides.

Dans la demande de brevet JP 08031231 A il est décrit une formulation à base de graphite sphérique, de thermodurcissable ou de thermoplastique et de noir de carbone de type ketjenblack conducteur. Le matériau présente une bonne résistance mécanique et peut être utilisé pour le moulage et le calandrage. Ce matériau est utilisable dans le domaine de la pile à combustible.

Dans la demande de brevet JP 04013287 A on décrit une plaque de carbone poreuse dans les trois dimensions à hauteur de 60 à 80 % de porosité.

Dans la demande de brevet JP 52122276 A on décrit une électrode préparée par dépôt sur un textile poreux de carbone anisotropique pyrolysé, lui-même recouvert d'une dispersion aqueuse de TEFLON® (PTFE) et le tout est séché pour former une couche poreuse hydrophobe.

Dans la demande de brevet WO 200025372 il est décrit une plaque bipolaire pour utilisation dans le domaine des piles à combustibles et provenant du moulage d'une résine vinyl ester et d'une poudre de graphite permettant d'obtenir une conductivité d'au moins 10 S/cm. Ces plaques peuvent contenir de 20 à 95% de graphite et de 0 à 5% de noir de carbone ainsi que des fibres de coton. On y décrit aussi l'utilisation de produits fluorés pour améliorer le démoulage ainsi que l'hydrophobie.

Dans le brevet US 5268239 on décrit la préparation d'une plaque séparatrice. Cette plaque à base de graphite est un mélange contenant de 25 à 75% en masse de graphite et de 25 à 75% en masse de résine phénolique. Cette plaque est ensuite pyrolysée entre 800 et 1000°C, puis graphitée entre 2300°C et 3000°C. Ce brevet décrit aussi l'application d'un film de fluoropolymère pour éviter la migration de l'électrolyte.

Dans la demande de brevet WO 200024075 on décrit la préparation d'un substrat, utilisable pour la préparation de membrane, ce substrat comprend une matrice de fibre poreuse, caractérisé par le fait que les fibres sont collées avec de la silice et un polymère fluoré. Il est décrit aussi le procédé, avec dans un premier temps la dispersion des fibres dans l'eau puis dans un deuxième temps le dépôt de cette dispersion pour former un réseau. Le réseau de fibres est alors séché et compacté. Une dispersion aqueuse de fluoropolymère pouvant être introduite avant ou après cette étape de séchage et compactage.

Dans le brevet FR 2355381 il est décrit un procédé de préparation d'une électrode pour piles à combustible caractérisé par les étapes suivantes: (i) tout d'abord la formation d'une suspension aqueuse de particules de catalyseur, avec addition d'un agent tensio-actif cationique, puis (ii) formation d'une deuxième suspension aqueuse colloïdale de polymère hydrophobe, (iii) mélange des deux suspensions pour former une suspension aqueuse uniforme de particules de catalyseur et de particules de polymère hydrophobe. Cette suspension est alors déposée sur un support conducteur et chauffée afin de fritter la couche de catalyseur et de polymère.

Dans le brevet FR 2430100 il est décrit un procédé de préparation d'une poudre sèche finement divisée caractérisée en ce qu'elle est constituée par des grains ayant une dimension maximum d'environ 5 µm. Cette poudre comprend du carbone précatalysé et un polymère fluorocarboné hydrophobe, par exemple le PTFE. Cette poudre est obtenue par floculation d'une co-suspension des grains de carbone précatalysé et des grains de polymères.

Dans le brevet EP 0948071 il est une méthode pour produire une électrode pour piles à combustible, ainsi qu'une poudre catalytique préparée en mélangeant une poudre fine de carbone supportant un métal catalytique avec une dispersion colloïdale d'un polymère. La suspension ainsi obtenue est séchée.

Dans le brevet EP 0557259 il est décrit la préparation d'une électrode de diffusion gazeuse pour cellule électrochimique. Cette électrode est préparée à l'aide d'une poudre de noir de carbone dispersée dans un solvant organique en présence de polyéthylène soluble. La dispersion est ensuite séchée ce qui permet au polyéthylène de recouvrir la surface du noir. Ce polyéthylène est ensuite fluoré. Cette poudre de noir de carbone hydrophobe est ensuite mélangée à un noir de carbone de type acétylénique supportant un métal catalyseur ainsi que du PTFE pour former des agrégats. Ces agrégats sont ensuite pressés à 20 kg/cm² et frittés à 340°C pendant 20 minutes.

Dans le brevet EP 0928036 il est décrit une méthode de préparation d'électrode perméable au gaz, en effectuant une dispersion de particules de noir de carbone ou de noir de carbone supportant un catalyseur en utilisant un équipement à haut cisaillement pour l'homogénéiser tel que les micro - fluidiseurs puis en ajoutant un liant à la dispersion obtenue puis un agent stabilisant. Ce mélange est ensuite déposé sur un tissu électro-conducteur puis séché et fritté à 300 - 400°C.

Dans la demande de brevet WO 200030202 il est décrit une composition moulable permettant la préparation de plaques collectrices de courant par compression moulage ou injection moulage. Cette composition comprend un liant polymère non fluoré; parmi les polymères utilisables on trouvera les polyphénylène sulfides, les polyphénylène éther modifiés, les polymères cristaux liquides, les polyamides, les polyimides, les, polyesters, les phénoliques, les résines époxydes et les vinyl esters. Parmi les particules conductrices on trouvera plus particulièrement les particules carbonées. Ces particules carbonées sont présentes à hauteur d'au moins 45 % en masse.

Makoto Ushida dans J. Electrochem. Soc., vol. 142, - No. 12, December 1995 a étudié la préparation d'une MEA (membrane and electrode assembly), basée sur la formation d'un colloïde permettant d'optimiser la formation d'un réseau dans la couche de catalyseur et de simplifier la fabrication de la MEA. La préparation par la réalisation par exemple d'un mélange de perfluorosulfonate ionomer (PFSI) en solution dans de l'éthanol est additionnée d'acétate de butyle (un mauvais solvant) pour former une solution colloïdale. Puis un carbone supportant du platine est mélangé à un carbone recouvert de PTFE. Ce carbone recouvert de PTFE est réalisé en mélangeant une suspension de carbone et une suspension de PTFE ainsi qu'un surfactant, le surfactant est alors enlevé lors d'un traitement sous air à 290°C. Le mélange des deux poudres Pt/C et C/PTFE est additionné à la solution colloïdale du PFSI ce qui génère une réticulation des chaînes de PFSI adsorbées par le carbone favorisée par un traitement ultrasonique. Cette suspension colloïdale est ensuite étalée sur un papier carbone qui est pressé à 130°C à 7,5 MPa pendant 1 minute.

Fischer dans Journal of applied electrochimstry 28 (1998) pp 277-282 a étudié la préparation de MEA en pulvérisant le mélange d'un slurry (suspension) d'un métal catalyseur, d'une solution de Nafion® (acrylate fluoré) dans l'eau et de glycerol, sur une membrane à base de Nafion 117 ® chauffée. Les solvants sont ensuite évaporés par chauffage à 150°C.

Dans le brevet US 4214969 il est décrit une plaque bipolaire pour piles à combustibles constituée de graphite et de fluoropolymère dans un ratio 2.5 :1 à 16 :1. Ces plaques bipolaires présentent une conductivité volumique 4.10⁻³ Ω.in. Ce mélange de graphite et de fluoropolymère est mélangé à sec dans un mélangeur pendant 25 minutes puis introduit dans un moule à chaud sous pression.

La demande de brevet GB 2220666 décrit une méthode de coatomisaton pour la préparation de particules de noir de carbone revêtues de façon très homogène par des particules de latex synthétique. Il n'est cité aucun aucun polymère fluoré dans la description ni dans les exemples.

L'art antérieur a essentiellement décrit la réalisation de plaques bipolaires par des procédés discontinus utilisant des solvants ou des procédés ne faisant intervenir que des mélanges grossiers des différents produits utilisés dans la réalisation des plaques. L'art antérieur décrivant une coatomisation n'a pas décrit les PVDF.

On a maintenant trouvé une poudre microcomposite très homogène à base d'un PVDF et d'un électroconducteur et que cette poudre pouvait être mise en oeuvre par les techniques telles que l'injection, l'injection transfert, l'injection moulage utilisées habituellement pour les thermoplastiques. Les objets ainsi fabriqués sont utiles dans les piles à combustibles (plaque bipolaire) et les supercacacités.

Cette poudre microcomposite peut être produite par coatomisation d'une dispersion aqueuse comprenant un PVDF et un électroconducteur. Le procédé ne fait intervenir aucun solvant autre que l'eau. Les avantages et autres caractéristiques de la présente invention sont exposés dans la description détaillée de l'invention qui suit.

### [Brève description de l'invention]

La présente invention concerne une poudre microcomposite comprenant des particules de 1 à 300 µm d'un produit électroconducteur recouvertes de particules de 0,1 à 0,5 µm d'un PVDF homopolymère ou copolymère contenant au moins 60 % en poids de VF₂.

Selon une forme avantageuse de l'invention la poudre microcomposite comprend un produit (A) qui est un polymère ou un oligomère pouvant être solubilisé par un solvant qui n'est pas un solvant du PVDF ni du produit électroconducteur.

La présente invention concerne aussi les objets constitués de cette poudre. Ces objets peuvent être des plaques bipolaires de piles à combustible ou des éléments de supercapacités.

### [Description détaillée de l'invention]

**S'agissant de l'élément électroconducteur** ce sont tous les conducteurs de l'électricité. On peut citer à titre d'exemple les métaux, les oxydes métalliques et les produits à base de carbone. A titre d'exemple de produits à base de carbone on peut citer le graphite, les agrégats de noir de carbone, les fibres de carbone, les nanotubes de carbone et les charbons actifs. On ne sortirait pas du cadré de l'invention en utilisant plusieurs éléments électroconducteurs par exemple; (i) du graphite et des agrégats de noir de carbone; (ii) du graphite, des agrégats de noir de carbone et des fibres de carbone; (iii) des agrégats de noir de carbone et des fibres de carbone; (iv) du graphite et des fibres de carbone.

Les produits à base de carbone pouvant être utilisés sont décrits dans Handbook of fillers 2^{nd} Edition published by Chem Tec Publishing 1999 page 62 § 2.1.22, page 92 § 2.1.33 et page 184 § 2.2.2. De façon préférable, on pourra utiliser des graphites de taille comprise entre 20 et 50 µm. Parmi les noirs de carbone pouvant être utilisés on peut citer les noirs Ketjen® EC 600 JD de surface spécifique 1250 m²/gr ou Ketjen® EC 300 J. de surface spécifique 800 m²/gr. On pourra de façon avantageuse utiliser les fibres de carbone de longueur de 150 µm.

**S'agissant du du PVDF** on désigne ainsi un PVDF homopolymère ou copolymère contenant au moins 60% en poids de VF2.

A titre d'exemple de comonomère éventuel, on peut citer le fluorure de vinyle; le trifluoroethylene (VF3); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro(1,3-dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogene ou F(CF2)z et z vaut 1, 2, 3 ou 4; le produit de formule R3OCF=CH2 dans laquelle R3 est F(CF2)z- et z est 1, 2, 3 or 4; le perfluorobutyl ethylene (PFBE); le 3,3,3-trifluoropropene et le 2-trifluoromethyl-3,3,3-trifluoro-1-propene.

Avantageusement le cononomère est le HFP.

Le PVDF peut aussi comprendre des monomères non fluorés tels que l'éthylène. Le PVDF peut contenir des plastifiants ou des additifs, comme par exemple un plastifiant bien connu le dibutyle sébaçate.

La poudre microcomposite peut comprendre, en poids, 10 à 40% de PVDF pour respectivement 90 à 60% de produit électroconducteur. De façon avantageuse la poudre comprend 15 à 30% de PVDF pour respectivement 85 à 70% de produit électroconducteur. Dans les proportions précédentes il s'agit d'un PVDF contenant éventuellement des plastifiants ou des additifs. La poudre microcomposite peut contenir aussi jusqu'à 5 parties en poids pour 100 parties de l'ensemble constitué du PVDF et du produit électroconducteur d'un agent porogène. A titre d'exemple d'agent porogène on peut citer le carbonate de calcium, l'azobiscarbonamide.

La poudre microcomposite se présente sous forme de particules de produit étectroconducteur recouvertes avantageusement de façon uniforme par des particules de PVDF Les particules de PVDF peuvent recouvrir en partie ou en totalité les particules de produit électroconducteur. La poudre contient aussi l'agent porogène éventuel.

La poudre microcomposite peut être fabriquée par (co)atomisation d'une ou plusieurs emulsions ou dispersions aqueuses contenant ses différents constituants. Par exemple la poudre microcomposite de l'invention peut être fabriquée par coatomisation entre un latex de PVDF (une émulsion ou une suspension) et une dispersion aqueuse de produit électroconducteur. Le latex et la dispersion sont introduits dans la tête de coatomisation selon les techniques habituelles. On peut aussi avant coatomisation faire un mélange par introduction directe du produit électroconducteur dans le latex de PVDF soit encore mélanger une dispersion du produit électroconducteur et du latex de PVDF. L'atomisation consiste à pulvériser une dispersion aqueuse (ou une suspension) ou même une solution dans un courant d'air chaud pour éliminer l'eau et récupérer les produits dissous, dispersés ou en suspension.

**Selon une forme avantageuse de l'invention** la poudre microcomposite comprend un produit (A) qui est un polymère ou un oligomère pouvant être solubilisé par un solvant qui n'est pas un solvant du PVDF ni du produit électroconducteur. A titre d'exemple de (A) on peut citer le poly(oxyethylène)glycol appelé communément polyéthylène glycol (PEG), avantageusement la masse *Mn* est comprise entre 400 et 15000 gr/mole et la température de fusion comprise entre 50 et 80°C. A titre d'exemple de PEG on peut citer le PLURIOL E® de la société BASF ou le POLYGLYKOL® 1500 de la société CLARIANT. La poudre microcomposite est alors constituée d'un produit électroconducteur recouvert de particules de PVDF et de (A). La poudre microcomposite peut contenir aussi jusqu'à 30 parties en poids pour 100 parties de l'ensemble constitué du PVDF et du produit électroconducteur.

On peut fabriquer cette poudre par coatomisation comme décrit plus haut pour les poudres sans polymère (A), il suffit d'ajouter (A) dans le latex de PVDF ou dans la dispersion du produit électroconducteur. (A) se dépose alors sur le graphite par précipitation sous la forme de filament pouvant lier certaines particules d'électroconducteur. L'avantage de la présence de (A) est qu'une fois qu'un objet a été fabriqué, il suffit de l'immerger dans l'eau pour enlever (A) et créer une porosité supplémentaire.

S'agissant des objets constitués de cette poudre il suffit d'extruder cette poudre avec un profil de vis peu cisaillant et à une température suffisante pour que le PVDF soit à l'état fondu, par exemple 15 à 30°C au dessus de sa température de fusion. On peut aussi injecter cette poudre dans une presse à injecter avec une vis présentant un profil de type PVC en étant à une température suffisante pour que le PVDF soit à l'état fondu, par exemple 15 à 40°C au dessus de sa température de fusion. S'agissant du PVDF il suffit d'extruder cette poudre à 230°C sur extrudeuse bi-vis co ou contra rotative présentant un profil de vis peu cisaillant ou de l'injecter à 240°C dans une presse à injecter avec une vis présentant un profil de type PVC.

Les plaques bipolaires obtenues à l'aide de la poudre microcomposite précédente peuvent présenter une masse volumique allant de 500 à 3000 kg/m³, une résistivité comprise entre 0.01 et 1 Ω.cm en résistivité volumique et de 0.01 à 0.5 Ω en résistivité surfacique. Le module de flexion des plaques bipolaires peut être compris entre 1000 et 12000 MPa et la contrainte en flexion à la rupture est comprise entre 1 et 50 MPa. Ces caractéristiques sont obtenues en ajustant les proportions et la nature des constituants.

### EXEMPLES :

### Exemple 1 : (selon l'invention) plaque perméable

On part d'un latex de KYNAR® 9000 de la société ATOFINA présentant un extrait sec à 25.4% et d'une dispersion de graphite préparée selon le mode opératoire suivant :
Les produits suivants entrent en oeuvre :
   Le KYNAR®9000 est un PVDF homopolymère de MVFR (Melt Volume Flow Rate) 10 cm3/10 min à 230°C sous 5 kg.
   Un latex de Kynar® 9000 (Extrait sec = 25.4%), un élément carboné, le Graphite, un antimousse (Byc 019), un surfactant (Coadis 123K) .

La dispersion de graphite est préparée en mélangeant l'eau, le surfactant, l'anti-mousse puis après dissolution, on ajoute la charge sous forte agitation en visant un extrait sec élevé (50%). On ajoute sous agitation modérée le latex puis on complète avec de l'eau pour obtenir une dispersion liquide facilement pompable ayant un ES (Extrait Sec) de 20%. La composition de la dispersion de graphite est donnée ci-après: 2.245kg d'eau, 1.16 g d'antimousse, 0.3 kg de surfactant (agitation modérée) puis rajouter 2.4 kg de Graphite. Agiter jusqu'à obtenir une solution liquide qui ne décante pas. Ajouter sous agitation 2.33 kg de Latex de PVDF KYNAR 9000 et 8.1 kg d'eau.
Le mélange dispersion de graphite / latex de PVDF ainsi préparé est ensuite pompé sous agitation modérée puis coatomisé en utilisant les conditions opératoires suivantes :
Température d'entrée du coatomiseur: 170°C
Température de sortie du coatomiseur: 60°C
Débit total : 17 kg/h

La coatomisation, sur un atomiseur MINOR PRODUCTiON® de la société NIRO, des particules de latex de PVDF et des particules de graphite permet la préparation de 2.55 kg de poudre micro-composite de composition 80% massique de graphite et 20 % massique de PVDF.

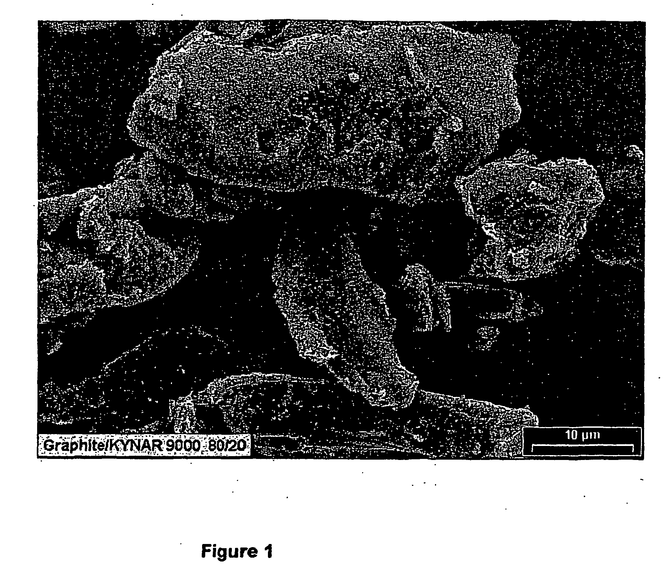

Cette poudre micro-composite est pressée à 80 kg / cm², la plaque obtenue présente une masse volumique de 1140 kg/m³. Cette plaque est perméable à l'eau et à l'air et présente une résistivité volumique de 0.14 Ω.cm. La fig 1 représente une photo de la poudre microcomposite obtenue avant pressage. On y voit des particules de graphite de 10 à 30 µm recouvertes de petites billes de PVDF.

### Exemple 2 : (selon l'invention) plaque dense

On part d'un latex de KYNAR® 1000 de la société ATOFINA présentant un extrait sec à 25% et d'une dispersion de graphite préparée selon le mode opératoire suivant :
Les produits suivants entrent en oeuvre :
   Le KYNAR®1000 est un PVDF homopolymère de MVFR (Melt Volume Flow Rate) 1.1 cm3/ 10 min à 230°C sous 5 kg.
      Un latex de Kynar 1000 (Extrait sec = 25%), un élément carboné, le Graphite, un antimousse (Byc 019), un surfactant (Coadis 123K).

Une dispersion de graphite est préparée en mélangeant l'eau, le surfactant, l'anti-mousse puis après dissolution, on ajoute la charge sous forte agitation en visant un extrait sec élevé (50%). On ajoute sous agitation modérée le latex puis on complète avec de l'eau pour obtenir une dispersion liquide facilement pompable (ES à 20%). La composition de la dispersion de graphite est donnée ci-après : 973 g d'eau, 0.5 g d'antimousse, 129.8 g de surfactant (agitation modérée) puis rajouter 1040g de Graphite. Agiter fortement jusqu'à obtenir une solution liquide qui ne décante pas. Ajouter sous agitation modérée 1040g de Latex de PVDF KYNAR 1000 et 3475.1 g d'eau.
Le mélange dispersion de graphite / latex de PVDF ainsi préparé est ensuite pompé sous agitation modérée puis coatomisé en utilisant les conditions opératoires suivantes :
Température d'entrée du coatomiseur : 170°C
Température de sortie du coatomiseur : 60°C
Débit total : 17 kg/h

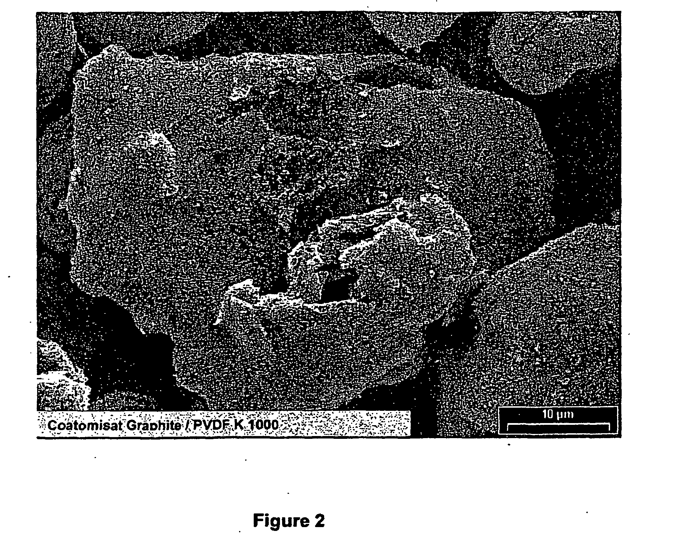

La coatomisation sur un atomiseur MINOR PRODUCTION® de la société NIRO des particules de latex de PVDF et des particules de graphite permet la préparation de 1000 gr de poudre micro - composite de composition 80% massique de graphite et 20 % massique de PVDF. Cette poudre micro - composite est pressée, la plaque obtenue présente une masse volumique de 1630 kg/m³. Cette plaque est très peu perméable à l'eau et à l'air et présente une résistivité volumique de 0.066 Ω.cm. La fig 2 représente une photo de la poudre microcomposite obtenue avant pressage. On y voit des particules de graphite de 10 à 30 µm recouvertes de petites billes de PVDF.

### Exemple 3 : (selon l'invention) Plaque perméable à conductivité améliorée.

On part d'un latex de KYNAR® 9000 de la société ATOFINA présentant un extrait sec à 20.8% et d'une dispersion de graphite préparée selon le mode opératoire suivant :
Les produits suivants entrent en oeuvre :
   Un latex de Kynar 9000 (Extrait sec = 20.8%), un élément carboné, le Graphite, un antimousse, un surfactant et un noir de carbone.

Une dispersion de graphite et de noir de carbone (Ketjen® EC 600 JD) est préparée en mélangeant l'eau, le surfactant (Coadis 123K), l'anti-mousse (Byc 019) puis après dissolution, on ajoute les charges (graphite et noir de carbone) sous forte agitation en visant un extrait sec élevé (50%). On ajoute sous agitation modérée le latex puis on complète avec de l'eau pour obtenir une dispersion liquide facilement pompable (ES à 20%). La composition de la dispersion de graphite est donnée ci-après : 373.87g d'eau, 0.19g d'antimousse, 49.9 g de surfactant (agitation modérée) puis rajouter 397.5g de Graphite et 2.5 g de noir de carbone. Agiter fortement jusqu'à obtenir une solution liquide qui ne décante pas. Ajouter sous agitation modérée 479.8g de Latex de PVDF KYNAR 9000 et 1256.74 g d'eau.

Le mélange dispersion de graphite / latex de PVDF ainsi préparé est ensuite pompé sous agitation modérée puis coatomisé sur un atomiseur MINOR MOBILE® de la société NIRO en utilisant les conditions opératoires suivantes
Température d'entrée du coatomiseur : 185°C
Température de sortie du coatomiseur : 65°C
Air comprimé : 2.4 bars

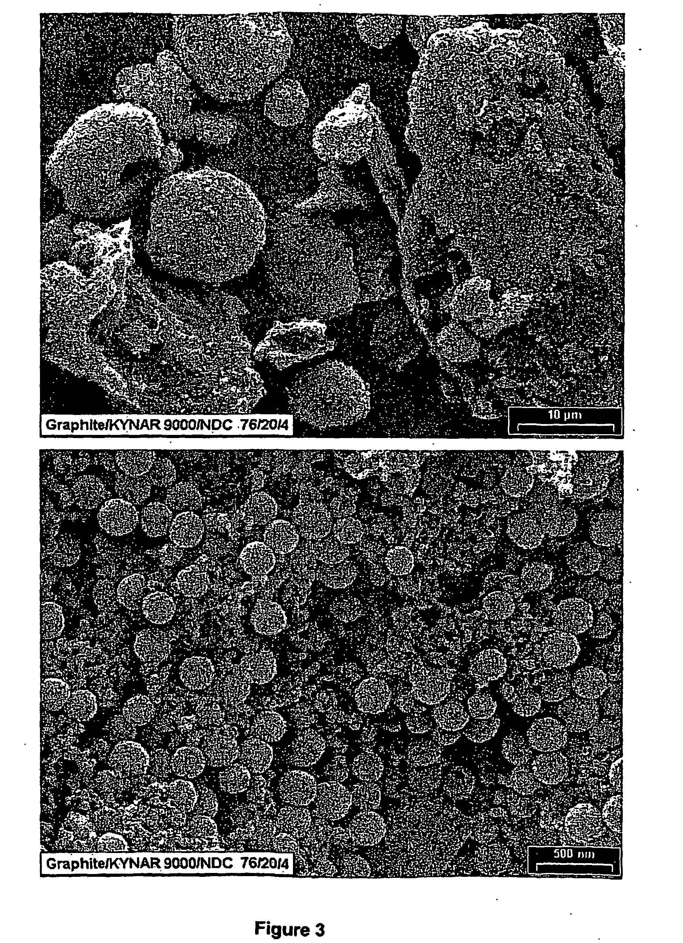

La coatomisation des particules de latex de PVDF et des particules de graphite permet la préparation de 395 gr de poudre micro - composite à une composition de 20 % massique de PVDF, 79.5% massique de graphite et 0.5% de noir de carbone. La masse volumique est de 1210 Kg/m³ et la résistivité volumique est de 0.078 Ω.cm. La figure 3 présente (en haut) une photo de la poudre avant pressage et en bas une photo agrandie d'une partie de la surface d'une particule de graphite recouverte de particules de PVDF(grosses billes blanches) et d'agrégats de noir de carbone(petites billes en grappes).

### Exemple 4 : (selon l'invention) Plaque perméable

On part d'un latex de KYNAR® 9000 de la société ATOFINA présentant un extrait sec à 21% et d'une dispersion de graphite préparée selon le mode opératoire suivant :
Les produits suivants entrent en oeuvre :
   Un latex de Kynar 9000 (Extrait sec = 21 %), un élément carboné, le Graphite, un antimousse, un surfactant et du PEG (polyethylène glycol POLYGLYKOL® 1500 de la société CLARIANT).

Une dispersion de graphite est préparée en mélangeant l'eau, le surfactant (coadis 123K), l'anti-mousse (Byc 019) puis après dissolution, on ajoute la charge sous forte agitation en visant un extrait sec élevé (50%). On ajoute sous agitation modérée le latex puis de l'eau puis on complète avec une solution aqueuse de PEG à 20% d'ES pour obtenir une dispersion liquide facilement pompable (ES à 20%). La composition de la dispersion de graphite est donnée ci-après : 327.44g d'eau, 0.17g d'antimousse, 43.7 g de surfactant (agitation modérée) puis rajouter 350g de Graphite. Agiter fortement jusqu'à obtenir une solution liquide qui ne décante pas. Ajouter sous agitation modérée 416.7 g de Latex de PVDF KYNAR 9000 et 1102.75 g d'eau. Après préparation de ce slurry on ajoute 62.5 g de PEG dissout dans 250 g d'eau.

Le mélange dispersion de graphite / latex de PVDF ainsi préparé est ensuite pompé sous agitation modérée puis coatomisé sur un atomiseur MINOR MOBILE® de la société NIRO en utilisant les conditions opératoires suivantes :
Température d'entrée du coatomiseur : 185°C
Température de sortie du coatomiseur : 65°C
Air comprimé : 2,4 bars

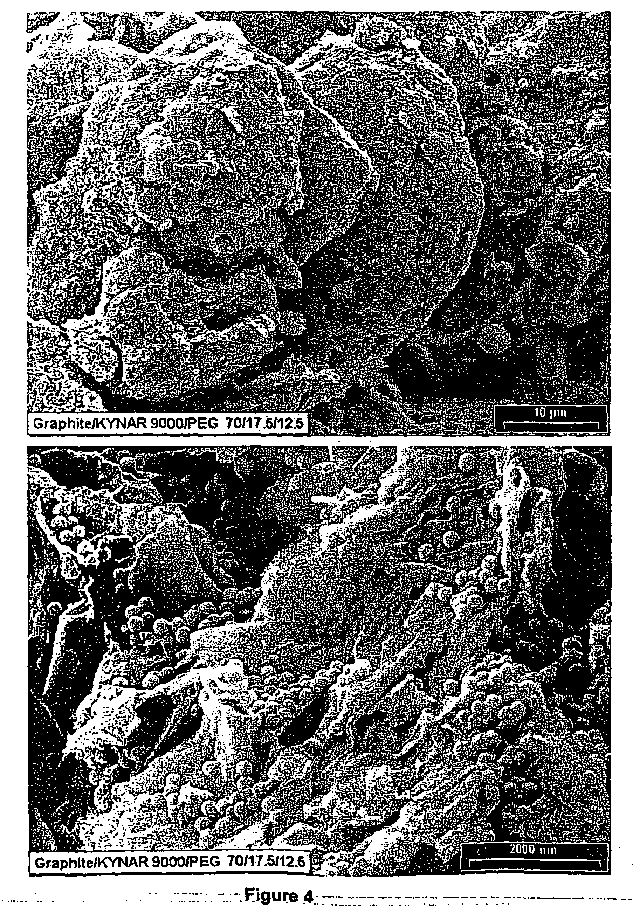

La coatomisation des particules de latex de PVDF et des particules de graphite permet la préparation de 375 gr de poudre micro - composite à une composition de 17.5 % massique de PVDF, 70 % massique de graphite et 12.5% de PEG. Cette poudre micro - composite est pressée à 80 kg / cm², la plaque obtenue présente une masse volumique de 1410 kg/m³. Cette plaque est immergée dans l'eau à 14.4°C pendant 113.8 heures. Après séchage à 50°C en étuve la plaque présente une densité de 1210 kg/m³. Cette plaque est perméable à l'air et à l'eau et présente une résistivité de 0.073 Ω.cm. La figure 4 présente (photo du haut) une photo de la poudre microcomposite avant pressage et en bas une photo agrandie de la surface d'une particule de graphite ou l'on peut observer les particules de PVDF(les billes) ainsi que les filaments de PEG précipités lors de l'atomisation.

### Exemple 5 : (selon l'invention) Plaque perméable

On part d'un latex de KYNAR® 9000 de la société ATOFINA présentant un extrait sec à 21% et d'une dispersion de graphite préparée selon le mode opératoire suivant :
Les produits suivants entrent en oeuvre:
   Un latex de Kynar 9000 (Extrait sec = 21 %), un élément carboné, le Graphite, un antimousse, un surfactant et du PEG (polyethylène glycol POLYGLYKOL® 1500 de la société CLARIANT).

Une dispersion de graphite est préparée en mélangeant l'eau, le surfactant (Coadis 123K), l'anti-mousse (Byc 019) puis après dissolution, on ajoute la charge sous forte agitation en visant un extrait sec élevé (50%). On ajoute sous agitation modérée le latex puis de l'eau puis on complète avec une solution aqueuse de PEG à 20% d'ES pour obtenir une dispersion liquide facilement pompable (ES à 20%). La composition de la dispersion de graphite est donnée ci-après : 311.5g d'eau, 0.5g d'antimousse, 41.4 g de surfactant (agitation modérée) puis rajouter 332.5g de Graphite. Agiter fortement jusqu'à obtenir une solution liquide qui ne décante pas. Ajouter sous agitation modérée 395.2 g de Latex de PVDF KYNAR 9000 et 1132.9 g d'eau. Après préparation de ce slurry on ajoute 84.5 g de PEG dissout dans 253.5 g d'eau.

Le mélange dispersion de graphite / latex de PVDF ainsi préparé est ensuite pompé sous agitation modérée puis coatomisé sur un atomiseur MINOR MOBILE® de la société NIRO en utilisant les conditions opératoires suivantes :
Température d'entrée du coatomiseur : 160°C
Température de sortie du coatomiseur : 60°C
-Air comprimé: 2.4 bars

La coatomisation des particules de latex de PVDF et des particules de graphite permet la préparation de 297.5 gr de poudre micro - composite à une composition de 16.6 % massique de PVDF, 66.5 % massique de graphite et 16.9% de PEG. Cette poudre micro - composite est alimentée en trémie pleine dans une bi-vis co-rotative ZSK, avec une filière de 3.5 mm. L'extrusion est réalisée sans aucune difficulté à 230°C, 30 tr/minute, le couple est de 15 N.m.

Le jonc obtenu présente une densité de 1500 kg/m³.

### Exemple 6 : selon l'invention

On procède comme dans l'exemple 4 en ajoutant du noir à la formulation. La poudre microcomposite ainsi préparée présente une composition de 17.5 % massique de PVDF, 69.5 % massique de graphite et 12.5% de PEG et 0.5 % de noir de carbone.

## Revendications

1. Poudre microcomposite constituée de particules de 1 à 300 µm d'un produit électroconducteur et de particules de 0,1 à 0,5 µm d'un fluoropolymère dans laquelle le fluoropolymère est un PVDF homopolymère ou copolymère contenant au moins 60% en poids de VF2.

2. Poudre selon la revendication 1 dans laquelle le produit électroconducteur est choisi parmi les produits à base de carbone tels que le graphite, les agrégats de noir de carbone, les fibres de carbone, les nanotubes de carbone et le charbon actif.

3. Poudre selon l'une quelconque des revendications précédentes dans laquelle les proportions sont , en poids, de 10 à 40% de fluoropolymère pour respectivement 90 à 60% de produit électroconducteur.

4. Poudre selon l'une quelconque des revendications précédentes contenant aussi jusqu'à 5 parties en poids d'un agent porogène pour 100 parties de l'ensemble constitué du fluoropolymère et du produit électroconducteur.

5. Poudre selon l'une quelconque des revendications précédentes comprenant un produit (A) qui est un polymère ou un oligomère pouvant être solubilisé par un solvant qui n'est pas un solvant du fluoropolymère ni du produit électroconducteur.

6. Poudre selon la revendication 5 contenant jusqu'à 30 parties en poids de (A) pour 100 parties de fensembfe constitué du fluoropolymère et du produit électroconducteur.

7. Poudre selon la revendication 5 ou 6 dans laquelle (A) est un polyéthylèneglycol.

8. Poudre selon l'une quelconque des revendications 5 à 7 dans laquelle (A) est déposé sur le graphite par précipitation sous la forme de filaments pouvant lier certaines particules d'électroconducteur.

9. Objets constitués de la poudre de l'une quelconque des revendications précédentes.

10. Objets selon la revendication 9 qui sont des plaques bipolaires de piles à combustible, ou des éléments de supercapacités.

11. Plaques bipolaires obtenues à l'aide de la poudre microcomposite selon l'une quelconque des revendications 1 à 8 ayant une masse volumique allant de 500 à 3000 kg/m³, une résistivité comprise entre 0.01 et 1 Ω.cm en résistivité volumique et de 0.01 à 0.5 Ω en résistivité surfacique.

12. Plaques bipolaires selon la revendication 11 ayant un module de flexion compris entre 1000 et 12000 MPa.

13. Plaques bipolaires selon la revendication 11 ou 12 ayant une contrainte en flexion à la rupture comprise entre 1 et 50 MPa.

14. Procédé de préparation de la poudre de l'une quelconque des revendications 1 à 8 par (co)atomisation d'une ou plusieurs émulsions ou dispersions aqueuses contenant ses différents constituants.

## Claims

1. Microcomposite powder consisting of particles of from 1µm to 300 µm of an electrically conductive product and particles of from 0.1µm to 0.5 µm of a fluoropolymer, in which the fluoropolymer is a PVDF homopolymer or copolymer containing at least 60% by weight of VF2.

2. Powder according to Claim 1, in which the electrically conductive product is chosen from carbon-based products such as graphite, carbon black aggregates, carbon fibres, carbon nanotubes and active charcoal.

3. Powder according to any one of the preceding claims, in which the proportions are, by weight, from 10% to 40% of fluoropolymer per 90% to 60%, respectively, of electrically conductive product.

4. Powder according to any one of the preceding claims, also containing up to 5 parts by weight of a porogen per 100 parts of the assembly consisting of the fluoropolymer and the electrically conductive product.

5. Powder according to any one of the preceding claims,
comprising a product (A) which is a polymer or an oligomer which can be dissolved with a solvent which is not a solvent for the fluoropolymer or for the electrically conductive product.

6. Powder according to Claim 5, containing up to 30 parts by weight of (A) per 100 parts of the assembly consisting of the fluoropolymer and the electrically conductive product.

7. Powder according to Claim 5 or 6, in which (A) is a polyethylene glycol.

8. Powder according to any one of Claims 5 to 7, in which (A) is deposited on the graphite by precipitation in the form of filaments which can link certain electrically conductive particles.

9. Objects consisting of the powder of any one of the preceding claims.

10. Objects according to Claim 9, which are bipolar plates of fuel cells, or supercapacitor components.

11. Bipolar plates obtained using the microcomposite powder according to any one of Claims 1 to 8, having a mass per unit volume ranging from 500 to 3 000 kg/m³ and a resistivity of between 0.01 and 1 Ω.cm in volume resistivity and from 0.01 to 0.5 Ω in surface resistivity.

12. Bipolar plates according to Claim 11, having a flexural modulus of between 1 000 and 12, 000 MPa.

13. Bipolar plates according to Claim 11 or 12, having a flexural breaking stress of between 1 and 50 MPa.

14. Process for preparing the powder of any one of Claims 1 to 8, by (co)atomization of one or more aqueous dispersions or emulsions containing the various constituents thereof.

## Patentansprüche

1. Mikrokompositpulver, bestehend aus Teilchen mit einer Größe von 1 bis 300 µm aus einem elektrisch leitfähigen Produkt und Teilchen mit einer Größe von 0,1 bis 0,5 µm aus einem Fluorpolymer, worin es sich bei dem Fluorpolymer um ein PVDF-Homopolymer oder -Copolymer mit mindestens 60 Gew.-% VF2 handelt.

2. Pulver nach Anspruch 1, worin das elektrisch leitfähige Produkt aus Produkten auf Basis von Kohlenstoff wie Graphit, Rußaggregaten, Kohlenstoffasern, Kohlenstoffnanoröhrchen und Aktivkohle ausgewählt ist.

3. Pulver nach einem der vorhergehenden Ansprüche, worin die Gewichtsanteile 10 bis 40% Fluorpolymer auf 90 bis 60% elektrisch leitfähiges Produkt betragen.

4. Pulver nach einem der vorhergehenden Ansprüche, außerdem enthaltend bis zu 5 Gewichtsteile eines Porenbildners auf 100 Teile der Gesamtmenge des Fluorpolymers und des elektrisch leitfähigen Produkts.

5. Pulver nach einem der vorhergehenden Ansprüche, enthaltend ein Produkt (A), bei dem es sich um ein Polymer oder Oligomer handelt, das durch ein Lösungsmittel, das kein Lösungsmittel für das Fluorpolymer oder das elektrisch leitfähige Produkt ist, gelöst werden kann.

6. Pulver nach Anspruch 5, enthaltend bis zu 30 Gewichtsteile (A) auf 100 Teile der Gesamtmenge des Fluorpolymers und des elektrisch leitfähigen Produkts.

7. Pulver nach Anspruch 5 oder 6, worin es sich bei (A) um ein Polyethylenglykol handelt.

8. Pulver nach einem der Ansprüche 5 bis 7, worin (A) durch Ausfällung in Form von Fäden, die bestimmte Teilchen aus elektrischem Leiter verbinden können, auf dem Graphit abgeschieden worden ist.

9. Gegenstände aus dem Pulver nach einem der vorhergehenden Ansprüche.

10. Gegenstände nach Anspruch 9, bei denen es sich um Bipolarplatten für Brennstoffzellen oder Superkondensatoren handelt.

11. Mit Hilfe des Mikrokompositpulvers nach einem der Ansprüche 1 bis 8 erhaltene Bipolarplatten mit einer volumenbezogenen Masse von 500 bis 3000 kg/m³, einem spezifischen Durchgangswiderstand zwischen 0,01 und 1 Ω.cm und einem spezifischen Oberflächenwiderstand von 0,01 bis 0,5 Ω.

12. Bipolarplatten nach Anspruch 11 mit einem Biegemodul zwischen 1000 und 12000 MPa.

13. Bipolarplatten nach Anspruch 11 oder 12 mit einer Biegefestigkeit zwischen 1 und 50 MPa.

14. Verfahren zur Herstellung des Pulvers nach einem der Ansprüche 1 bis 8 durch (Co)zerstäuben einer oder mehrerer wäßriger Emulsionen oder Dispersionen, die dessen verschiedene Bestandteile enthalten.
